# EUROPÄISCHE PATENTANMELDUNG

(11) **EP 1 582 387 A2**
(43) Veröffentlichungstag der Anmeldung: **05.10.2005**
(21) Anmeldenummer: 05006904.6
(22) Anmeldetag: 30.03.2005
(51) Int. Cl.: B60J 7/043

(54) **Schiebedach für ein Fahrzeug**

(30) Priorität: 02.04.2004 DE 202004005268 U
(71) Anmelder: ArvinMeritor GmbH, 63128 Dietzenbach (DE)
(72) Erfinder: Stehning, Kai, 61250 Usingen (DE)
(74) Vertreter: Kitzhofer, Thomas

(57) **Zusammenfassung**

Ein Schiebedach für ein Fahrzeug hat einen zum wahlweisen Freilegen und Schließen einer Dachöffnung (3) über einen feststehenden Dachabschnitt (2) beim Öffnen des Schiebedachs verfahrbaren Deckel (4) und ein Führungssystem für den Deckel (4). Der feststehende Dachabschnitt (2) ist mit einer in Fahrzeuglängsrichtung gesehen mittig an ihm vorgesehenen Führungsschienenstruktur versehen, in der der Deckel (4) im Bereich seines hinteren Endes zumindest im Laufe der Öffnungsbewegung des Deckels (4) geführt ist und in deren Bereich die den feststehenden Dachabschnitt (2) nach außen abschließende Dachhaut (15) einstückig und geschlossen ausgebildet ist.

## Beschreibung

Die Erfindung betrifft ein Schiebedach für ein Fahrzeug, mit einem zum wahlweisen Freilegen und Schließen einer Dachöffnung über einen feststehenden Dachabschnitt beim Öffnen des Schiebedachs verfahrbaren Deckel und einem Führungssystem für den Deckel.

Derartige Fahrzeugdächer werden auch als sogenannte Spoilerdächer bezeichnet, bei denen der Deckel über die feststehende Dachhaut ausgestellt und oberhalb der Dachhaut nach hinten verschoben werden kann. Damit die Dachöffnung möglichst großflächig freigelegt wird, wird der Deckel zumindest teilweise über einen nicht verschieblichen, feststehenden Dachabschnitt verschoben. Seitlich des Dachabschnitts sind auf diesem im Stand der Technik Längsführungen vorgesehen. Diese von außen sichtbaren Längsführungen sind Umwelteinflüssen ausgesetzt. Aus diesem Grund sind Dichtungen am oberen Ende der Längsftihrungen vorgesehen, die den Eintritt von Schmutz und Feuchte weitgehend verhindern sollen. Derartige Dichtungen müssen hohen Anforderungen genügen und sind deshalb ebenso wie die Führungen teuer in der Herstellung und Montage.

Aus der DE 102 39 863 A1 ist ein Fahrzeugdach bekannt, bei dem im Bereich des rückseitigen Endes des Deckels ein schwenkbarer Hebel angebracht ist, der an einem Ende einen ersten seitlichen Zapfen besitzt, der permanent mit einer Führungsschiene gekoppelt ist. Ein zweiter Zapfen läuft im ausgestellten Zustand in die Führungsschiene ein.

Aufgabe der Erfindung ist es, ein kostengünstigeres Spoilerdach zu schaffen, das sich darüber hinaus auch noch durch eine geringe Bauhöhe auszeichnet.

Diese Aufgabe wird durch den Anspruch 1 gelöst.

Gegenüber den meisten bekannten Spoilerdächern hat das erfindungsgemäße Schiebedach nur eine mittige hintere Führung und nicht zwei seitliche, wodurch sich eine verbesserte Optik durch ein angenehmeres Fugenbild ergibt. Darüber hinaus wird die Dachaußenhaut insgesamt glatter, denn jede Führungsschiene führt natürlich zu einer Unterbrechung derselben.

In der DE 102 39 863 A1 ist gemäß einer Ausführungsform der feststehende Dachabschnitt einstückig ausgebildet und mit einem Längsschlitz versehen. Unterhalb dieses Längsschlitzes ist die Führungsschiene angeordnet, die als separates Teil ausgeführt ist. Wiederum unterhalb derselben kann oder sollte ein Wassermanagementsystem in Form einer Wasserrinne angeordnet sein.

Die Erfindung sieht im Gegensatz zu dieser Ausführungsform vor, daß die Dachhaut um die Führungsschienenstruktur herum einstückig und geschlossen ausgeführt ist, d.h. ohne geschlitzt zu sein. Dies bedeutet dann, wenn die Führungsstruktur in Form einer separaten Führungsschiene ausgebildet ist, daß die Dachhaut, welche den Abschluß des Daches nach außen bildet, unterseitig geschlossen längs der Führungsschiene herumläuft oder, wenn die Führungsschiene teilweise in einer Vertiefung in der Dachhaut untergebracht ist, unterhalb der Führungsschiene geschlossen um sie herum verläuft.

Darüber hinaus kann die Dachhaut auch selbst die Führungsstruktur bilden, indem sie entsprechend geformt ist.

Die Erfindung sieht vor, daß keine Wasserablaufrinne unterhalb des feststehenden Dachabschnitts und der mittigen Führungsschiene vorgesehen ist.

Durch Weglassen der Wasserablaufrinne wird zusätzlich in vertikaler Richtung Bauraum gespart.

Dadurch, daß ein starr mit dem Deckel verbundener, im Bereich des hinteren Endes des Deckels nach unten abstehender Zapfen in die Führungsschiene wenigstens beim Öffnen des Schiebedachs ragt, ist einerseits keine Hebemimik notwendig, und andererseits steht der Zapfen im geschlossenen Zustand nur geringfügig nach unten ab, verglichen zu dem im Stand der Technik nach unten geschwenkten Hebel. Damit ist die vertikale Bauhöhe des Deckels gering.

Zur optimalen Stabilisierung ist der Deckel im Bereich seiner vorderen Enden in zwei seitlichen Führungsschienen geführt. Diese Führungsschienen sind vorzugsweise am Innenrand der Dachöffnung positioniert, d.h. von außen nicht sichtbar und im geschlossenen Zustand unterhalb der Dachhaut liegend.

Obwohl die Erfindung auch für sogenannte aufgesetzte Deckel angewandt werden kann, d.h. Deckel, die bei geschlossener Dachöffnung über der Dachhaut der benachbarten feststehenden Dachabschnitte liegen, bezieht sich die bevorzugte Ausführungsform der Erfindung auf ein Schiebedach mit einem Deckel, der im geschlossenen Zustand des Dachs in der Dachöffnung sitzt, d.h. mit seiner Außenhaut absatzlos in die umliegenden feststehenden Dachabschnitte übergeht und beim Verfahren nach hinten angehoben wird.

Gemäß einer bevorzugten Ausführungsform ist die Führungsschiene in die Dach-Außenhaut integriert oder auf sie aufgesetzt. Die Integration in die Dach-Außenhaut erfolgt z.B. dadurch, daß die Dachhaut selbst umgeformt ist und zur Führungsschiene wird, indem sie beispielsweise eine umgekehrt T-förmige Nut erhält. Eine andere Möglichkeit der Integration der Führungsschiene in die Dachhaut besteht darin, die Dachhaut mit einer rinnenförmigen Vertiefung auszuführen und in diese Vertiefung die als separates Teil ausgeführte Führungsschiene einzubetten. Bei dieser Ausführungsform sind keine zusätzlichen Befestigungsmittel für die Führungsschiene in der um sie herum geformten Dachhaut notwendig.

Der feste Dachabschnitt kann aus Blech sein oder ein Kunststoff-Verbundbauteil.

Eine aufgesetzte Führungsschiene besteht beispielsweise aus einem separaten Teil, das von außen auf der Dach-Außenhaut befestigt ist, z.B. durch Schrauben oder Kleben.

Die Erfindung zeichnet sich darüber hinaus auch dadurch aus, daß die Führungsschiene ohne nach außen deutende Dichtung ausgeführt ist. Im Stand der Technik waren die Führungsschienen stets mit zwei aneinandergepreßten Dichtungen versehen, zwischen denen Hebel liefen, die die Dichtungen auseinanderdrückten. Dies ist kostenintensiv und führt zu erhöhter Reibung. Die Erfindung sieht nun vor, daß die Führungsschiene nach außen ohne Dichtung ausgeführt ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht von oben auf das erfindungsgemäße Schiebedach bei geschlossener Dachöffnung,
- Figur 2 eine Schnittansicht längs der Linie II-II in Figur 1 durch das erfindungsgemäße Schiebedach in ausgestelltem Zustand des Deckels,
- Figur 3 eine Schnittansicht längs der Linie II-II in Figur 1 bei zurückgefahrenem Deckel, und
- Figuren 4, 5 und 6 Querschnittsansichten durch drei verschiedene Führungsschienen.

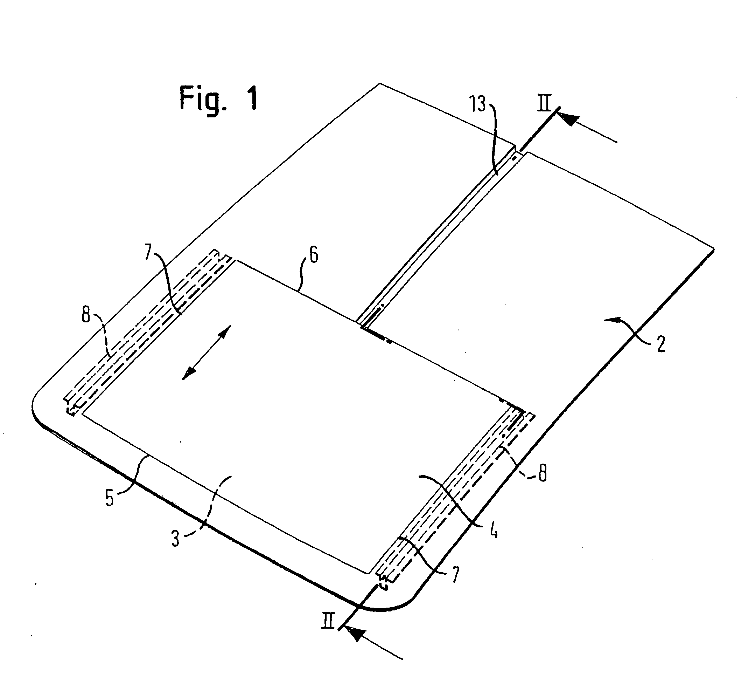

In Figur 1 ist ein Schiebedach für ein Kraftfahrzeug dargestellt, das als Modul ausgebildet ist, welches an seinem Rand am nicht dargestellten Dachrahmen durch Kleben bleibend befestigt ist. Das Schiebedach hat einen feststehenden Dachabschnitt 2, z.B. aus Blech oder vorzugsweise Verbundmaterial. Der feststehende Dachabschnitt 2 hat eine Dachöffnung 3, die durch einen in Fahrzeuglängsrichtung vorzugsweise motorisch verfahrbaren Deckel 4 geschlossen oder freigelegt werden kann. Der Deckel 4 hat ein, bezogen auf die Fahrzeuglängsrichtung, vorderes Ende 5 und ein hinteres Ende 6.

Im geschlossenen Zustand sitzt der Deckel 4 in der Dachöffnung 3 und grenzt mit seiner Außenhaut absatzlos an die angrenzende Dachhaut des feststehenden Dachabschnitts 2 an. In anderen Worten: der Deckel 4 steht in Seitenansicht gegenüber dem feststehenden Dachabschnitt 2 nach oben nicht vor.

Der Deckel 4 ist über ein Führungssystem mit dem feststehenden Dachabschnitt 2 gekoppelt, wobei das Führungssystem drei Führungsschienen umfaßt.

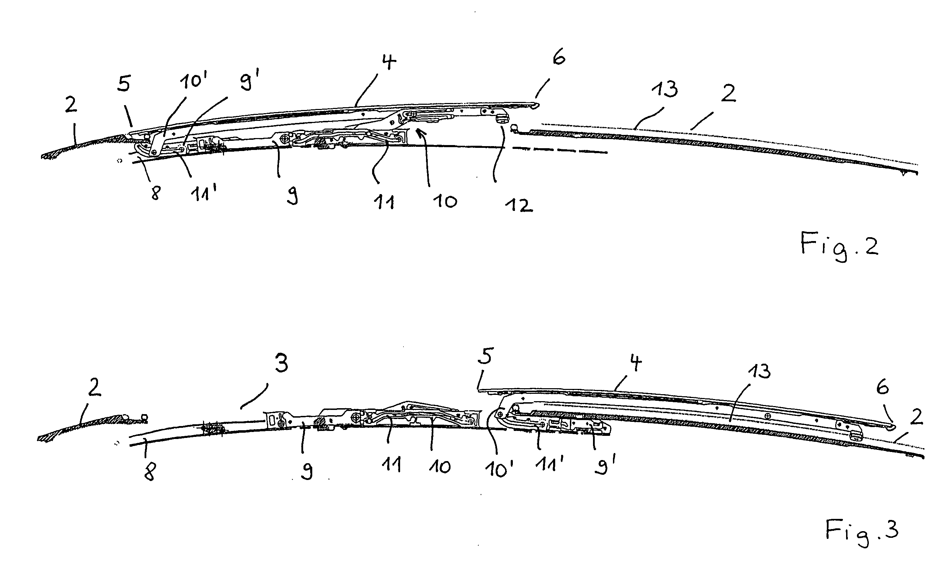

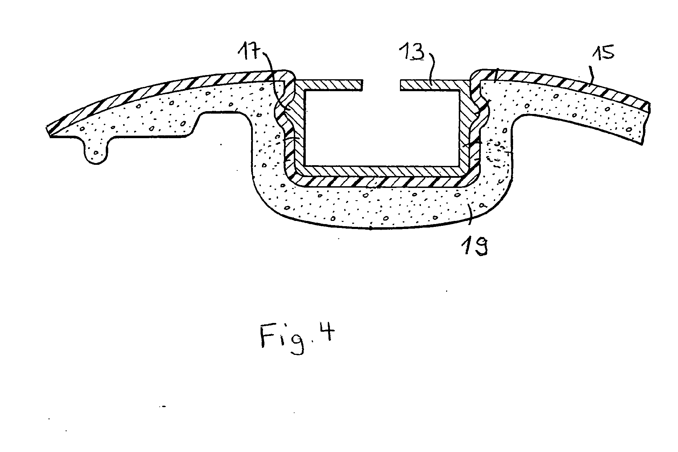

Im Bereich seiner Seitenränder 7 ist der Deckel 4 nahe seines vorderen Endes 5 in zwei seitlich des Deckels 4 liegenden, am Innenrand der Dachöffnung 3 angeordneten Führungsschienen 8 geführt. In den Führungsschienen 8 laufen motorisch angetriebene Gleiter 9, 9', die über eine Führungsmechanik 10, 10' in Form von mehreren Hebeln, die zum Teil mit Kulissenführungen 11, 11' zusammenwirken, mit dem Deckel 4 gekoppelt sind (siehe Figuren 2 und 3).

Auf der Unterseite im Bereich des hinteren Endes 6 des Deckels 4 steht von diesem ein starr an ihm befestigter Zapfen in Form eines T-förmigen Gleiters 12 ab. Dieser ist im geschlossenen Zustand des Deckels in keiner Führung aufgenommen. Für den T-förmigen Gleiter 12, der in der Mitte des Deckels 4 positioniert ist, ist eine außenliegende, im feststehenden Dachabschnitt 2 vorgesehene Führungsstruktur, in Form einer im Dachabschnitt 2 untergebrachten mittigen Führungsschiene 13 vorgesehen. Diese Führungsschiene 13 ist von außerhalb des Fahrzeugs sichtbar und nach oben offen, d.h. nicht mit seitlich komprimierbaren Dichtungen versehen.

Zum Belüften des Fahrzeuginnenraums kann der Deckel 4 im Bereich seines hinteren Endes 6 angehoben werden, wie Figur 2 zeigt. Hierzu werden Gleiter 9 bewegt, die entsprechende Führungsmechanik 10 sorgt dann für das Ausstellen bzw. Kippen des Deckels 4. Der Deckel 4 kann aus dieser Stellung zum kompletten Öffnen des Schiebedachs und zum Freilegen der Dachöffnung 3 auch nach hinten über den feststehenden Dachabschnitt 2 verfahren werden. Dabei dringt der Gleiter 12 in die mittige Führungsschiene 13 ein, sobald der Deckel 4 nach hinten verfahren wird.

Der Deckel 4 rastet dann aus einem Teil der Führungsmechanik 10 aus, für die eine hintere Endstellung erreicht ist (siehe Figur 3). In der zurückgefahrenen Stellung ist dann der Deckel 4 im Bereich seines hinteren Endes 6 über den Gleiter 12 in der mittigen Führungsschiene 13 gehaltert. Im Bereich des vorderen Endes 5 ist die nach wie vor fest mit dem Deckel 4 gekoppelte Führungsmechanik 10' mit der Kulissenführung 11' über zugeordnete Gleiter 9' in den seitlichen Führungsschienen 8 gelagert.

Im geschlossenen Zustand der Dachöffnung sind die Führungsschienen 8 nicht von außen zu sehen, sie liegen unterhalb der Dachhaut und sind durch die Dachhaut vor Umwelteinflüssen geschützt. An den Führungsschienen 8 sind Wasserablaufrinnen angebracht, die eindringendes Wasser zu Ablaufkanälen leiten.

Bei der Ausführungsform nach Figur 4 ist die Führungsschiene 13, die aus Metall oder Kunststoff ausgeführt ist, in die Dachhaut 15 integriert. Die komplett einstückige Dachhaut 15 besteht aus einer Kunststoffolie, die geschlossen um die Führungsschiene 13 herum geformt ist und diese formschlüssig in sich einbettet. Hierzu sind Fortsätze 17 an der Außenwand der Führungsschiene 13 angeformt, welche in entsprechende Vertiefungen in der Dachhaut 15 aufgenommen sind. Die Dachhaut 15 wird durch Hinterspritzen oder Hinterschäumen zu einem Verbundbauteil. Da die Dachhaut unter und neben der Führungsschiene 13 geschlossen ist, muß keine Wasserablaufrinne vorgesehen sein.

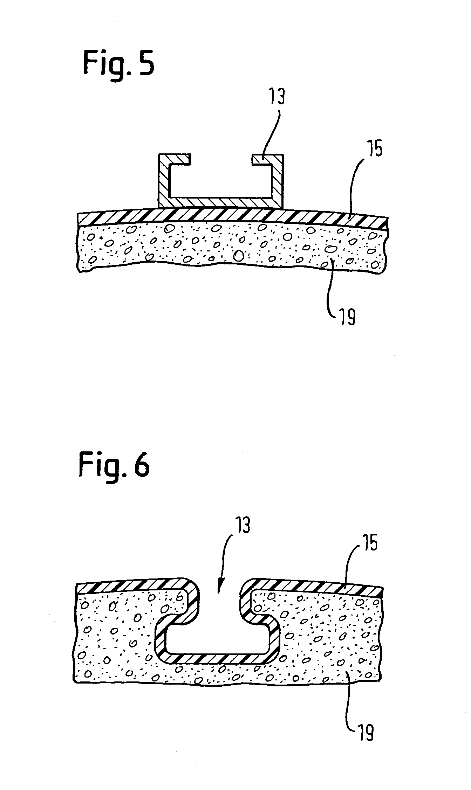

Alternativ könnte natürlich die Führungsschiene 13, wie in Figur 5 gezeigt, auch auf die Dachhaut von außen aufgesetzt sein. Auch hier ist die einstückige Dachhaut 15 aus einer Kunststoffolie, die hinterschäumt wird, und auch hier ist die Dachhaut 15 unter der Führungsschiene 13 geschlossen, so daß keine Wasserablaufrinne vorzusehen ist. Die entsprechende Schaumstoffschicht ist auch bei dieser Ausführungsibrm mit dem Bezugszeichen 19 versehen.

Bei der Ausführungsform nach Fig. 6 wird die Führungsstruktur durch die plastistisch verformte Dachhaut 15 selbst gebildet, die zur Führungsschiene 13 umgeformt wird. Die Dachhaut 15 ist einstückig und geschlossen, auch im Bereich der Führungsstruktur, so daß sich erneut eine Wasserablaufrinne erübrigt.

## Patentansprüche

1. Schiebedach für ein Fahrzeug, mit
einem zum wahlweisen Freilegen und Schließen einer Dachöffnung (3) über einen feststehenden Dachabschnitt (2) beim Öffnen des Schiebedachs verfahrbaren Deckel (4) und
einem Führungssystem für den Deckel (4),
wobei der feststehende Dachabschnitt (2) mit einer in Fahrzeuglängsrichtung gesehen mittig an ihm vorgesehenen Führungsschienenstruktur versehen ist, in der der Deckel (4) im Bereich seines hinteren Endes zumindest im Laufe der Öffnungsbewegung des Deckels (4) geführt ist und in deren Bereich die den feststehenden Dachabschnitt (2) nach außen abschließende Dachhaut (15) einstückig und geschlossen ausgebildet ist.

2. Schiebedach nach Anspruch 1, **dadurch gekennzeichnet, daß** der Deckel (4) im Bereich seines vorderen Endes (5) in zwei seitlichen Führungsschienen (8) geführt ist.

3. Schiebedach nach Anspruch 2, **dadurch gekennzeichnet, daß** die seitlichen Führungsschienen (8) am Rande der Dachöffnung (3) angeordnet sind.

4. Schiebedach nach Anspruch 2 oder 3, **dadurch gekennzeichnet, daß** die seitlichen Führungsschienen (8) in geschlossenem Zustand des Schiebedachs von außen nicht sichtbar unterhalb der Dachhaut liegen.

5. Schiebedach nach einem der vorhergehenden Ansprüche, **dadurch gekennzeichnet, daß** der Deckel (4) in geschlossenem Zustand des Dachs in der Dachöffnung (3) sitzt und zum Entlüften oder Verfahren angehoben wird.

6. Schiebedach nach einem der vorhergehenden Ansprüche, **dadurch gekennzeichnet, dass** ein starr mit dem Deckel (4) verbundener, im Bereich seines hinteren Endes (6) nach unten abstehender Zapfen wenigstens beim Öffnen des Schiebedachs in die mittige Führungsstruktur ragt und in ihr formschlüssig aufgenommen ist.

7. Schiebedach nach einem der vorhergehenden Ansprüche, **dadurch gekennzeichnet, daß** der Zapfen ein Gleiter (12) ist, der erst beim Verfahren des Deckels (4) nach hinten in die mittige Führungsstruktur eindringt und die Führungsstruktur mit dem Deckel (4) koppelt.

8. Schiebedach nach einem der vorhergehenden Ansprüche, **dadurch gekennzeichnet, daß** die Führungsstruktur eine als separates Teil ausgebildete mittige Führungsschiene (13) ist, die in die Dachhaut (15) integriert oder auf sie aufgesetzt ist.

9. Schiebedach nach Anspruch 8, **dadurch gekennzeichnet, daß** die Dachhaut (15) unter der mittigen Führungsschiene (13) und gegebenenfalls an der Unterseite der Führungsschiene (13) um sie herum geschlossenen verläuft.

10. Schiebedach nach einem der Ansprüche 1 bis 7, **dadurch gekennzeichnet, daß** die Dachhaut (15) zur Bildung einer Führungsstruktur geformt ist.

11. Schiebedach nach einem der vorhergehenden Ansprüche, **dadurch gekennzeichnet, daß** der feststehende Dachabschnitt im Bereich oder unterhalb der mittigen Führungsschiene (13) längs der Führungsschiene (13) wasserablaufrinnenfrei ausgebildet ist.

12. Schiebedach nach einem der vorhergehenden Ansprüche, **dadurch gekennzeichnet, daß** die mittige Führungsschiene (13) nach außen ohne Dichtung ausgeführt ist.
